# EUROPÄISCHE PATENTSCHRIFT

(11) **EP 3 593 022 B1**
(45) Veröffentlichungstag und Bekanntmachung des Hinweises auf die Patenterteilung: **12.05.2021**
(21) Anmeldenummer: 18703492.1
(22) Anmeldetag: 16.01.2018
(51) Int. Cl.: F16K 31/385, F16K 31/524, F16K 7/17, F16K 47/08, F16K 1/52, E03C 1/00, G05D 7/01

(54) **SANITÄRVENTIL UND KORRESPONDIERENDE BAUREIHE**
PLUMBING VALVE AND CORRESPONDING SERIES
VANNE SANITAIRE ET SÉRIE DE FABRICATION CORRESPONDANTE

(30) Priorität: 10.03.2017 DE 202017101403 U
(43) Veröffentlichungstag der Anmeldung: 15.01.2020
(60) Teilanmeldung: 20210138.2
(73) Patentinhaber: Neoperl GmbH, 79379 Müllheim (DE)
(72) Erfinder: TEMPEL, Marc, 79111 Freiburg (DE)
(74) Vertreter: Mertzlufft-Paufler, Cornelius
(86) Internationale Anmeldenummer: PCT/EP2018/050980
(87) Internationale Veröffentlichungsnummer: WO 2018/162125

(56) Entgegenhaltungen:
- CN-A- 106 051 208
- DE-A1- 10 114 261
- DE-A1-102012 221 043
- DE-U1- 8 703 945
- DE-U1-202013 002 281
- JP-A- 2008 291 984

## Beschreibung

Die Erfindung betrifft ein Sanitärventil, mit einem Hauptventil, das eine bewegliche Membran aufweist, und einen Pilotventil, mit welchen das Hauptventil ansteuerbar ist, wobei eine Position der Membran durch eine Stellung eines Ventilstößels des Pilotventils vorgebbar ist.

Derartige Sanitärventile sind bekannt und werden beispielsweise eingesetzt, um ein Zu- oder Umschalten in einem Wasserweg mit einer möglichst geringen Betätigungskraft und/oder mit einem möglichst weichen Schaltverhalten zu realisieren. DE 10 2012 221 043 A1 offenbart ein Sanitärventil nach dem Oberbegriff des Anspruchs 1.

Der Erfindung liegt die Aufgabe zugrunde, ein Sanitärventil mit verbesserten Gebrauchseigenschaften zu schaffen.

Zur Lösung der Aufgabe sind erfindungsgemäß die Merkmale des Anspruchs 1 vorgesehen. Insbesondere wird somit erfindungsgemäß zur Lösung der Aufgabe bei einem Sanitärventil der eingangs beschriebenen Art vorgeschlagen, dass der Ventilstößel mit einer Push-push-Mechanik verbunden ist, mit welcher der Ventilstößel zwischen wenigstens drei Schaltpositionen umschaltbar ist. Die Erfindung ermöglicht somit, neben den bekannten Offen- und Schließstellungen zusätzlich weitere Schaltpositionen, beispielsweise Zwischenstellung zwischen "voll geöffnet" und "voll geschlossen", zu realisieren. Diese Zwischenstellungen sind mit der Erfindung einfach über die Betätigung der Push-push-Mechanik erreichbar. Somit sind die Gebrauchseigenschaften gegenüber den bisher bekannten Sanitärventilen verbessert. Beispielsweise können so wassersparende Schaltzustände gegenüber der voll geöffneten Schaltposition einfach realisiert sein.

Somit ist zwischen der Offenstellung und der Schließstellung eine Vielzahl von Zwischenstufen realisierbar, die eine fein abgestimmte Auswahl eines Wassersparverhaltens erlaubt. Dies kann beispielsweise dadurch erreicht sein, dass jede der Schaltpositionen ein Drosselverhalten definiert, so dass sich eine abgestufte Anordnung von unterschiedlichen Drosselöffnungsquerschnitten ergibt.

Eine Push-push-Mechanik wird dadurch charakterisiert, dass eine mechanische Führung einen vorzugsweise zyklischen Wechsel zwischen den erreichbaren Schaltzuständen durch wiederholtes, gleichartiges Betätigen (beispielsweise durch Drücken) eines Betätigungselements erzwingt.

Bei einer vorteilhaften Ausgestaltung kann vorgesehen sein, dass die Push-push-Mechanik zwei äußere Schaltpositionen und wenigstens zwei innere Schaltpositionen definiert, wobei die wenigstens zwei inneren Schaltpositionen zwischen den zwei äußeren Schaltpositionen liegen. Somit ist eine feinere Abstufung von Zwischenstellungen erreichbar. Hierbei kann vorgesehen sein, dass ein Abstand zwischen den zwei inneren Schaltpositionen kleiner ist als ein Abstand einer der inneren Schaltposition zu einer jeweils benachbarten oder nächstliegenden äußeren Schaltposition. Somit sind Totwege, die bei einem Verlassen der Schließstellung und/oder der Offenstellung zurückzulegen sind, einfach berücksichtigbar. Derartige Totwege können beispielsweise dadurch entstehen, dass innerhalb einer breiten Toleranz einer Fertigung des Sanitärventils das wirksame Erreichen der Schließstellung sichergestellt werden muss. Es ist somit möglich, den Verstellweg über diese Schließstellung hinaus zu definieren, um sicherzustellen, dass das Hauptventil auch wirklich schließt. Bevorzugt ist dieser Abstand kleiner als ein Abstand jeder der inneren Schaltpositionen zu einer jeweils benachbarten oder nächstliegenden äußeren Schaltposition. Somit sind Totwege an beiden Enden eines Stellwegs des Hauptventils berücksichtigbar. Bei einer vorteilhaften Ausgestaltung kann vorgesehen sein, dass eine Schaltposition der wenigstens drei Schaltpositionen eine Offenstellung des Pilotventils definiert. Somit ist das Ventil durch Betätigen der Push-push-Mechanik öffenbar. Bevorzugt ist diese Schaltposition eine äußere Schaltposition. Diese äußere Schaltposition begrenzt somit einseitig den Verstellweg des Hauptventils.

Bei einer vorteilhaften Ausgestaltung kann vorgesehen sein, dass eine Schaltposition der wenigstens drei Schaltpositionen eine Schließstellung des Pilotventils definiert. Somit ist das Hauptventil durch entsprechend häufige Betätigung der Push-push-Mechanik schließbar. Bevorzugt ist diese Schaltposition eine äußere Schaltposition. Somit ist eine einseitige Begrenzung des Stellwegs des Hauptventils einrichtbar.

Besonders günstig ist es, wenn die beiden äußeren Schaltpositionen realisiert sind, um den Stellweg beidseitig zu begrenzen.

Erfindungsgemäß bildet der Ventilstößel in einer Schaltposition der wenigstens drei Schaltpositionen einen Anschlag für die bewegliche Membran. Somit ist die Zwischenstellung einfach definierbar: Kontaktiert die Membran den Ventilstößel, so baut sich in einer die Membran beaufschlagenden Druckkammer ein Druck auf, der dazu führt, dass sich die Membran von dem Ventilstößel löst und sich auf den Ventilsitz hin bewegt. Dann ist aber eine vom Ventilstößel verschlossene Entlastungsöffnung wieder geöffnet, so dass sich der Druck abbaut. Dies bewirkt, dass die Membran zu Ventilstößel zurückkehrt, so dass wieder die beschriebene Ausgangsposition eingenommen ist. Bevorzugt ist diese Schaltposition eine innere Schaltposition. Somit ist beispielsweise eine Zwischenstellung zwischen der Offenstellung und der Schließstellung definierbar.

Bei einer vorteilhaften Ausgestaltung kann vorgesehen sein, dass die Push-push-Mechanik ein Führungsteil mit einer Anordnung von mehreren vorzugsweise parallel verlaufenden Führungsbahnen aufweist. Somit ist eine einfache Möglichkeit geschaffen, bei der jeder Führungsbahn eine Schaltposition zugeordnet sein kann. Bevorzugt ist das Führungsteil ortsfest ausgebildet, also in Bezug auf ein Gehäuse festgelegt. Insbesondere ist somit erreichbar, dass das Führungsteil fest in Bezug auf einen, beispielsweise den bereits erwähnten, Ventilsitz des Hauptventils angeordnet ist. Eine Position des Ventilstößels relativ zu dem ebenfalls an dem Gehäuse direkt oder indirekt festgelegten Ventilsitz ist somit an dem Führungsteil einfach für jede Schaltposition definierbar. Bevorzugt ist vorgesehen, dass die Schaltposition jeweils durch einen Anschlag in der jeweiligen Führungsbahn definiert ist. Dies stellt eine konstruktiv einfache Möglichkeit dar, die Schaltpositionen einzurichten. In Bezug auf einen Stellweg der Push-push-Mechanik sind somit die einzelnen Anschläge in unterschiedlichen Positionen oder Höhen angeordnet.

Vorzugsweise ist das Führungsteil austauschbar ausgebildet, beispielsweise als separates Bauteil. Dies ermöglicht die Bildung einer Baureihe von Ventilen mit übereinstimmendem Grundaufbau und unterschiedlichen Führungsteilen.
Es ist somit eine Baureihe von Sanitärventilen bildbar, bei der wenigstens zwei Varianten jeweils ein erfindungsgemäßes Sanitärventil, insbesondere wie zuvor beschrieben und/oder nach einem der auf ein Sanitärteil gerichteten Ansprüche, bilden, wobei die Sanitärventile einen übereinstimmenden Grundaufbau, insbesondere mit Hauptventil, Pilotventil, Verdrängerteil und Schaltteil, aufweisen und sich durch unterschiedliche Führungsteile, insbesondere unterschiedliche Positionierung von Anschlägen an den Führungsbahnen, unterscheiden.

Erfindungsgemäß weist die Push-push-Mechanik ein Verdrängerteil mit jeweils einem in einer von mehreren oder den Führungsbahnen laufenden Verdrängerelement auf. Dieses Verdrängerteil kann zur manuellen Betätigung mit einem von außen zugänglichen Betätigungselement gekoppelt oder ausgebildet sein. Bevorzugt ist das Verdrängerteil beweglich, insbesondere relativ zu dem beschriebenen Führungsteil, angeordnet. Somit ist ein Umschaltvorgang auslösbar.

Erfindungsgemäß weist die Push-push-Mechanik ein Schaltteil mit wenigstens einem in wenigstens einer ortsfesten Führungsbahn, beispielsweise einer der bereits erwähnten Führungsbahnen, laufenden und aus einer Führungsbahn in eine benachbarte Führungsbahn überführbaren Führungselement auf. Insbesondere kann hierbei vorgesehen sein, dass in den Führungsbahnen jeweils ein Anschlag, beispielsweise der bereits erwähnte Anschlag, für das Führungselement ausgebildet ist, welcher jeweils eine Schaltposition definiert. Bevorzugt ist das Schaltteil

beweglich, insbesondere relativ zu dem beschriebenen Führungsteil und/oder dem beschriebenen Verdrängerteil, angeordnet. Hierbei ermöglicht die relative Beweglichkeit gegenüber dem Führungsteilteil, dass das Schaltteil mit dem Verdrängerteil in dem Führungsteil bewegt werden kann. Bevorzugt weist das Führungsteil mehrere Führungselemente, beispielsweise Führungsvorsprünge, auf, die in den einzelnen Führungsbahnen laufen können. Hierbei kann vorgesehen sein, dass die bereits erwähnten Verdrängerelemente jeweils ein Führungselement entlang der Führungsbahn bewegen und an einem Ende der jeweiligen Führungsbahn aus dieser herausdrücken. Beim Umschalten ermöglichen die relative Beweglichkeit von Schaltteil und Führungsteil und eine entsprechend kurze Bemessung der Führungsbahnen, dass die Führungselemente die Führungsbahn verlassen und in die benachbarte Führungsbahn überführt werden. Besonders günstig ist es dabei, wenn das Schaltteil gegen eine Rückstellkraft beweglich angeordnet ist, um beispielsweise einen Berührkontakt zwischen dem Schaltteil und dem Verdrängerteil sicherzustellen und/oder um eine Rückholbewegung zu erzwingen. Die Rückstellkraft ermöglicht außerdem - beispielsweise mit entsprechend ausgebildeten Schrägen an dem Verdrängerteil und zwischen den Führungsbahnen - ein selbsttätiges Wechseln der Führungselemente zwischen den Führungsbahnen in einer gewünschten Wechselrichtung, sobald die Führungselemente ihre aktuelle Führungsbahn verlassen.

Die Führungsbahnen können hierbei beispielsweise als Nuten ausgebildet sein, in welche die Verdrängerelemente und die Führungselemente eingreifen.

Bei einer vorteilhaften Ausgestaltung kann vorgesehen sein, dass zwischen wenigstens einem Ventileingang und wenigstens einem Ventilausgang ein Ventilsitz angeordnet ist, der mit der Membrane verschließbar ist, wobei die Membrane eine Druckkammer abschließt, die aus dem wenigsten einen Ventileingang befüllbar ist, sodass die Membrane bei befüllter Druckkammer in einer Schließstellung den Ventilsitz verschließt und bei entlasteter Druckkammer in einer Offenstellung den Ventilsitz freigibt. Somit ist ein druckgesteuertes Schalten des Hauptventils durchführbar.

Bei einer vorteilhaften Ausgestaltung kann vorgesehen sein, dass mit dem Ventilstößel eine in den wenigstens einen Ventilausgang mündende Entlastungsöffnung an der Membrane verschließbar ist. Somit ist die erwähnte Drucksteuerung mit dem Pilotventil durchführbar.

Bei einer vorteilhaften Ausgestaltung kann vorgesehen sein, dass der Ventilstößel an einem in eine Druckkammer, beispielsweise in die bereits erwähnte Druckkammer, von außen abgedichtet eingeführten Steuerelement ausgebildet ist. Somit ist das Pilotventil beispielsweise mechanisch von außen betätigbar.

Bei einer vorteilhaften Ausgestaltung kann vorgesehen sein, dass in einer Wirkverbindung zwischen dem Pilotventil und der Push-push-Mechanik eine Ausgleichvorrichtung ausgebildet ist, die eine Betätigung der Push-push-Mechanik erlaubt, wenn das Pilotventil geschlossen ist. Dies ermöglicht eine Weiterbewegung der Push-push-Mechanik über eine durch einen Ventilsitz, beispielsweise den bereits erwähnten Ventilsitz, vorgegebene Endposition des Hauptventils hinaus. Somit kann einerseits erreicht werden, dass das Hauptventil sicher schließt, und es ist andererseits ermöglicht, dass die Push-push-Mechanik abgekoppelt vom Hauptventil eine Bewegung ausführen kann, die zum Verlassen der Schließstellung erforderlich ist. Hierbei kann vorgesehen sein, dass eine Kopplung zwischen dem Pilotventil und der Push-push-Mechanik über ein Rückstellelement hergestellt ist. Somit ist eine Kopplung außerhalb des beschriebenen Falls einfach herstellbar. Besonders günstig ist es, wenn das Rückstellelement an dem Ventilstößel angreift. Dies ermöglicht eine definierte Anordnung des Ventilstößels relativ zur Push-push-Mechanik. Dies ist besonders vorteilhaft für die Definition der erwähnten inneren Schaltpositionen oder Zwischenstellungen.

Zur Lösung der genannten Aufgabe sind erfindungsgemäß die Merkmale des nebengeordneten, auf ein Sanitärventil gerichteten Anspruchs vorgesehen. Insbesondere wird somit bei einem Sanitärventil der eingangs beschriebenen Art erfindungsgemäß zur Lösung der genannten Aufgabe vorgeschlagen, dass dem Hauptventil nachgelagert ein Durchflussmengenregler angeordnet ist. Von Vorteil ist dabei, dass unabhängig von den Strömungseigenschaften am Hauptventil eine gewünschte Obergrenze für eine Durchflussmenge (bezogen auf eine Zeiteinheit) einrichtbar ist. Der Durchflussmengenregler stellte diese Durchflussmenge in einem Arbeitsbereich druckunabhängig ein.

Besonders günstig ist es, wenn diese Lösung von möglicherweise eigenständiger erfinderischer Qualität mit der vorangehend beschriebenen und diskutierten ersten Lösung kombiniert wird. Es ist somit ein Ventil bildbar, das unterschiedliche Schaltposition einfach realisiert, wobei eine Obergrenze für die Durchflussmenge festlegbar ist, beispielsweise zur Erfüllung von gesetzlichen Vorgaben.

Bei einer vorteilhaften Ausgestaltung kann vorgesehen sein, dass der Durchflussmengenregler in einem rohrförmigen Abschnitt des oder eines Ventilausgangs des Hauptventils angeordnet ist. Somit ist der Durchflussmengenregler einfach ohne größere konstruktive Änderungen einsetzbar. Hierbei kann vorgesehen sein, dass der Durchflussmengenregler durch einen Ventilsitz des Hauptventils bis zu einem Anschlag in den rohrförmigen Abschnitt eingesetzt ist. Somit ist konstruktiv erreichbar, dass der Durchflussmengenregler nach einem Einbau schwer entfernt werden kann. Dies kann helfen, eine Einhaltung gesetzlicher oder sonstiger Vorgaben sicherzustellen.

Bei einer vorteilhaften Ausgestaltung kann vorgesehen sein, dass ein, insbesondere der bereits erwähnte, einen Regelspalt bildende Reglerkern eine in einer Richtung verjüngende Grundform aufweist. Somit ist eine Verstellbarkeit der Obergrenzen der Durchflussmenge, also der Soll-Durchflussmenge, in an sich bekannte Weise erreichbar. Hierzu ist der Reglerkern bevorzugt beweglich angeordnet. Insbesondere kann vorgesehen sein, dass die Richtung längs einer Stellrichtung der Membran ausgerichtet ist. Dies ermöglicht eine Kopplung der Verstellung der Membran mit der Verstellung des Reglerkerns.

Bei einer vorteilhaften Ausgestaltung kann vorgesehen sein, dass an dem Reglerkern ein Regelprofil ausgebildet ist, welches mit einem elastisch verformbaren Regelelement einen Regelspalt mit einem druckabhängigen Öffnungsquerschnitt definiert. Dies stellt eine an sich bekannte, hier vorteilhaft zu einer Definition einer Soll-Durchflussmenge verwendbare, Möglichkeit dar, die Durchflussmenge druckunabhängig zu realisieren.

Bei einer vorteilhaften Ausgestaltung kann vorgesehen sein, dass ein Regelelement als O-Ring ausgebildet ist. Somit ist ein einfach verfügbares und gut beherrschbares Regelelement verwendbar. Hierbei kann vorgesehen sein, dass ein, beispielsweise der bereits erwähnte, Reglerkern das Regelelement durchgreift. Somit ist durch eine Verstellung des Reglerkerns relativ zu dem Regelelement beispielsweise dann, wenn der Reglerkern verjüngend ausgeführt ist, eine Veränderung des Regelspalts erreichbar, um die Soll-Durchflussmenge zu verändern.

Bei einer vorteilhaften Ausgestaltung kann vorgesehen sein, dass eine Soll-Durchflussmenge des Durchflussmengenreglers mit einer Push-push-Mechanik, insbesondere der bereits erwähnten Push-push-Mechanik, veränderbar ist. Dies ermöglicht ein einfaches Verstellen zwischen definierten Soll-Durchflussmengen.

Bei einer vorteilhaften Ausgestaltung kann vorgesehen sein, dass ein Reglerkern, beispielsweise der bereits beschriebenen Reglerkern, des Durchflussmengenreglers verstellbar angeordnet und mit einer Push-push-Mechanik gekoppelt ist. Somit kann der Reglerkern definierte Positionen einnehmen, die vorgegebenen, diskreten Soll-Durchflussmengen entsprechen. Besonders günstig ist es, wenn der Reglerkern mit der Push-push-Mechanik, die das Hauptventil betätigt und/oder die am Pilotventil angreift, gekoppelt ist. Es sind somit das Hauptventil und der Durchflussmengenregler gemeinsam betätigbar. Besonders einfach ist es, wenn der Reglerkern verschiebbar ist.

Bei einer vorteilhaften Ausgestaltung kann vorgesehen sein, dass der Reglerkern mit der beweglichen Membrane verbunden ist. Dies stellt eine besonders einfach realisierbare Art der Ankopplung an die Push-push-Mechanik dar.

Bei einer vorteilhaften Ausgestaltung kann vorgesehen sein, dass das Regelelement in einer Aufnahme angeordnet ist, deren radialer Abschluss durch einen rohrförmigen Abschnitt, beispielsweise den bereits erwähnten rohrförmigen Abschnitt, eines Ventilauslasses, insbesondere des bereits beschriebenen Ventilauslasses, gebildet ist. Somit ist ein Regelelement mit größtmöglichem Durchmesser einsetzbar. Allgemein kann gesagt werden, dass ein Regelverhalten des Regelelements umso besser beherrschbar ist, je größer die Außenabmessungen des Regelelements sind. Die Ausgestaltung verzichtet auf einen radialen Abschluss der Aufnahme nach außen durch den Durchflussmengenregler selbst und stellt somit zusätzlichen Raum für ein größeres Regelelement zur Verfügung. Der radial äußere Abschluss der Aufnahme kann hierbei durch den erwähnten rohrförmigen Abschnitt gebildet sein.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: einen Axialschnitt durch ein erfindungsgemäßes Sanitärventil,
- Fig. 2-4: unterschiedlichen Schaltpositionen an dem Sanitärventil nach Fig. 1,
- Fig. 5: Durchflusskurven zu Schaltpositionen eines erfindungsgemäßen Sanitärventils,
- Fig. 6: eine dreidimensionale Schrägansicht des Sanitärventils nach Fig. 1,
- Fig. 7: Einzelteile des Sanitärventils nach Fig. 1, insbesondere der Push-push-Mechanik, in Explosionsdarstellung,
- Fig. 8: Einzelteile der Push-push-Mechanik aus Fig. 7,
- Fig. 9: eine abgewickelte Ansicht auf das Innere des Führungsteils aus Fig. 8 mit der Lage der Führungselemente und Verdrängerelemente,
- Fig. 10-13: unterschiedliche Schaltpositionen zur Erläuterung der Push-push-Mechanik nach Fig. 8,
- Fig. 14: den Übergang zwischen zwei Schaltpositionen,
- Fig. 15-18: die zugehörigen Schaltpositionen zu Fig. 10-13,
- Fig. 19: eine Alternative zu Fig. 8,
- Fig. 20: ein weiteres erfindungsgemäßes Sanitärventil im Axialschnitt,
- Fig. 21: eine dreidimensionale Schrägansicht auf die Zuströmseite des Durchflussmengenreglers aus Fig. 20,
- Fig. 22: eine Draufsicht auf die Zuströmseite zu Fig. 21,
- Fig. 23: eine Axialschnittansicht entlang des Schnitts in Fig. 22,

- Fig. 24: eine Explosionsdarstellung zu Fig. 21,
- Fig. 25: eine Ausbildung eines Reglerkerns an einem Ventilkörper,
- Fig. 26: einen schrägen Axialschnitt des Sanitärventils nach Fig. 1 und
- Fig. 27: eine Vergrößerung aus Fig. 26.

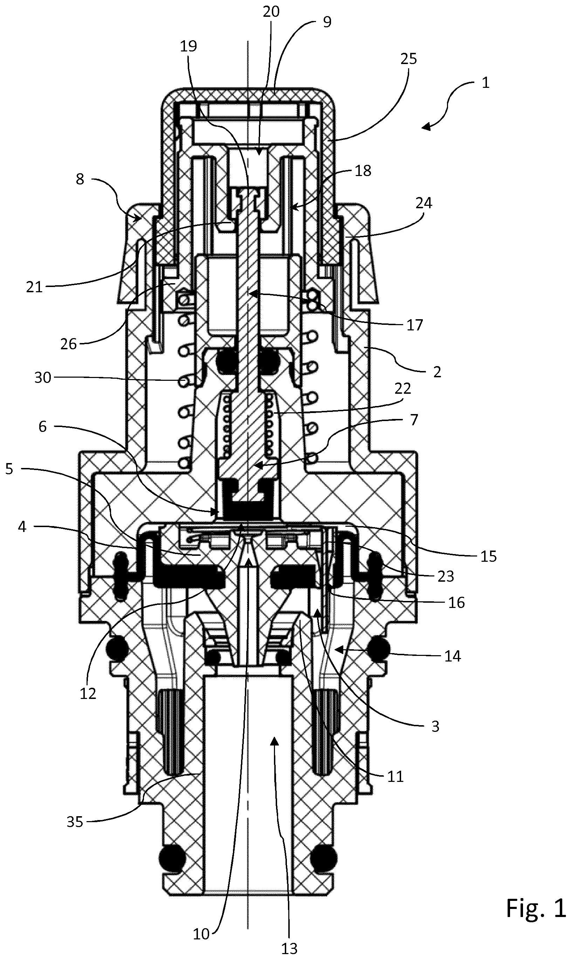

Figur 1 zeigt ein im Ganzen mit 1 bezeichnetes Sanitärventil, welches in einem Gehäuse 2 ein Hauptventil 3 aufweist.

Das Hauptventil 3 ist in an sich bekannter mit einer beweglichen Membran 4 ausgerüstet, welche aus einem elastischen Material besteht und einen Ventilkörper 5 des Hauptventils 3 trägt.

Die Membran 4 ist in ebenfalls an sich bekannter Weise mit einem Pilotventil 6 ansteuerbar. Hierzu weist das Pilotventil 6 einen längsverschieblichen Ventilstößel 7 auf, dessen Stellung entlang seines Stellwegs die jeweilige Position des Ventilkörpers 5 und somit der Membran 4 vorgibt.

Das Sanitärventil 1 weist weiter eine Push-push-Mechanik 8 auf. An dieser Push-push-Mechanik 8 ist außenseitig ein Betätigungselement 9 ausgebildet, mit welchem die Push-push-Mechanik 8 durch wiederholtes Drücken zwischen verschiedenen Schaltpositionen umschaltbar ist.

Der Ventilstößel 7 ist mit der Push-push-Mechanik 8 zur Herstellung einer Wirkverbindung verbunden.

Die Push-push-Mechanik 8 weist wenigstens drei Schaltzustände auf, zwischen denen der Ventilstößel 7 aufgrund der Wirkverbindung umschaltbar ist.

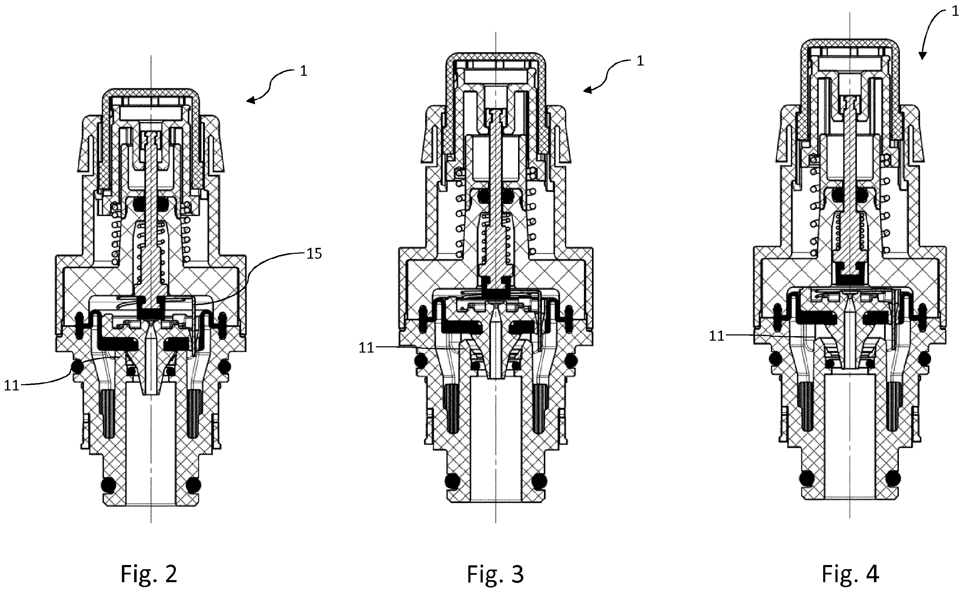

Fig. 2 zeigt eine untere oder äußere Schaltposition, in der das Hauptventil 3 geschlossen und somit in einer Schließstellung ist, Fig. 3 eine mittlere oder innere Schaltposition, in welcher das Hauptventil 3 ungefähr halb geöffnet und somit in einer Zwischenstellung ist, und eine obere oder weitere äußere Schaltposition, in welcher das Hauptventil 3 vollständig geöffnet und somit in einer Offenstellung ist.

Das Pilotventil 7 weist hierbei eine Entlastungsöffnung 10 auf, die an dem Ventilkörper 5 und somit an der beweglichen Membran 4 ausgebildet ist.

Wird die Entlastungsöffnung 10 verschlossen, so baut sich ein Druck auf, der die Membran 4 mit dem Ventilkörper 5 in einen Ventilsitz 11 des Hauptventils 3 drückt. Das Hauptventil 3 ist dann in seiner Schließstellung.

Wird die Entlastungsöffnung 10 geöffnet, so baut sich der erwähnte Druck ab, so dass sich die Membran 4 mit dem Ventilkörper 5 aus dem Ventilsitz 11 entfernt. Das Hauptventil 3 wird somit geöffnet.

Dementsprechend zeigen die Figuren 2 bis 4 unterschiedliche Stellungen des Ventilstößels 7, die jeweils eine Schaltposition der wenigstens drei Schaltpositionen, wie sie durch die Push-push-Mechanik 8 vorgegeben sind, bilden.

Fig. 4 zeigt eine äußere Schaltposition, die eine Offenstellung des Pilotventils definiert, und Fig. 2 eine weitere äußere

Schaltposition, die eine Schließstellung des Pilotventils 6 definiert. In Fig. 3 ist der Ventilstößel 7 dagegen in einer durch die Push-push-Mechanik 8 vorgegebenen Zwischenstellung, die eine innere Schaltposition auf dem Stellweg zwischen den äußeren Schaltpositionen darstelllt.

In dieser inneren Schaltposition bildet der Ventilstößel 7 einen Anschlag 12 für die bewegliche Membran 4, der hierzu an dem Ventilkörper 5 angreift.

Als nächstes wird der Vollständigkeit halber das Zusammenspiel von Hauptventil 3 und Pilotventil 6 näher erläutert.

Wie bereits erwähnt, hat das Hauptventil 3 einen Ventilsitz 11, der mit einem Ventilkörper 5 und der Membran 4 dicht verschließbar ist. Der Ventilsitz 11 ist zwischen wenigstens einem Ventileingang 13 und wenigstens einem Ventilausgang 14 angeordnet. Das Hauptventil 3 trennt daher den wenigstens einen Ventileingang 13 von dem wenigstens einen Ventilausgang 14 und stellt diese her.

Die Membran schließt eine Druckkammer 15 ab, die aus dem wenigstens einen Ventileingang 13 über eine Befüllöffnung 16 befüllbar ist. Die Befüllöffnung 16 ist immer offen.

Hierdurch wird erreicht, dass die Membran 4 (mit dem an ihr angeordneten Ventilkörper 5) bei befüllter Druckkammer 15 in einer Schließstellung den Ventilsitz 11 verschließt und bei entlasteter Druckkammer 15 in einer Offenstellung den Ventilsitz 11 freigibt.

Wie bereits beschrieben ist die Entlastungöffnung 10 mit dem Ventilstößel 7 verschließbar und freigebbar. Da die Entlastungsöffnung 10 in den wenigstens einen Ventilausgang 14 mündet, führt ein Öffnen der Entlastungsöffnung 10 zu dem bereits erwähnten Druckabbau in der Druckkammer 15 und somit zu einem Öffnen des Hauptventils 3. Die Entlastungsöffnung 10 ist hierzu größer als die Befüllöffnung 16 dimensioniert.

In der Zwischenstellung wird sich die Membran 4 auf den Ventilstößel 7 hin bewegen, bis der Ventilkörper 5 am Anschlag 12 anliegt. Dann wird ein Druckaufbau die Membran 4 vom Anschlag weg bewegen, wodurch die Entlastungsöffnung 10 wieder frei ist. Es folgt ein Druckabbau, der die Membran 4 wieder gegen den Anschlag 12 drückt. Es ergibt sich somit ein Gleichgewicht, in dem die Membran 4 an dem Anschlag 12 anliegt. Das Hauptventil 3 nimmt somit eine Zwischenstellung zwischen voll geöffnet und voll geschlossen ein.

Der Ventilstößel 7 ist über ein Steuerelement 17 an die Push-push-Mechanik 8 angekoppelt, um die bereits beschriebenen Schaltpositionen einzunehmen. Das Steuerelement 17 ist von außen in die Druckkammer 15 dicht eingeführt.

In der Wirkverbindung zwischen dem Pilotventil 6 und der Push-push-Mechanik 8 ist außerdem eine Ausgleichvorrichtung 18 ausgebildet, die eine Betätigung der Push-push-Mechanik 8 selbst dann erlaubt, wenn das Pilotventil 6 geschlossen ist und nicht weiter gegen den Ventilsitz 15 verfahren werden kann.

Hierzu weist die Ausgleichvorrichtung 18 einen Ausgleichstößel 19 auf, der beweglich in einer Stößelaufnahme 20 geführt ist, wobei die Stößelaufnahme 20 einen einseitigen Stößelanschlag 21 für den Ausgleichstößel 19 bildet.

Ein Rückstellelement 22, welches den Ventilstößel 7 gegen das Gehäuse 2 beaufschlagt, presst den Ausgleichstößel 19 gegen den Stößelanschlag 21, soweit dies in der jeweiligen Schaltposition möglich ist, um die Kopplung oder Wirkverbindung zwischen dem Pilotventil 6 und der Push-push-Mechanik 8 herzustellen.

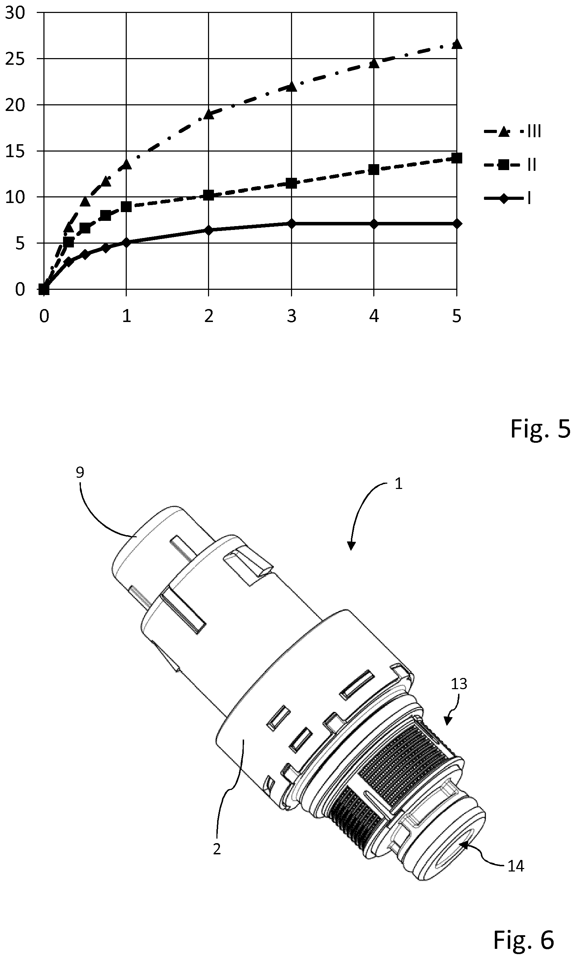

Fig. 6 zeigt eine dreidimensionale Außenansicht auf das beschriebene Sanitärventil 1. Das Gehäuse 2 ist außenseitig zum Einsetzen in eine nicht weiter dargestellte Armatur ausgebildet.

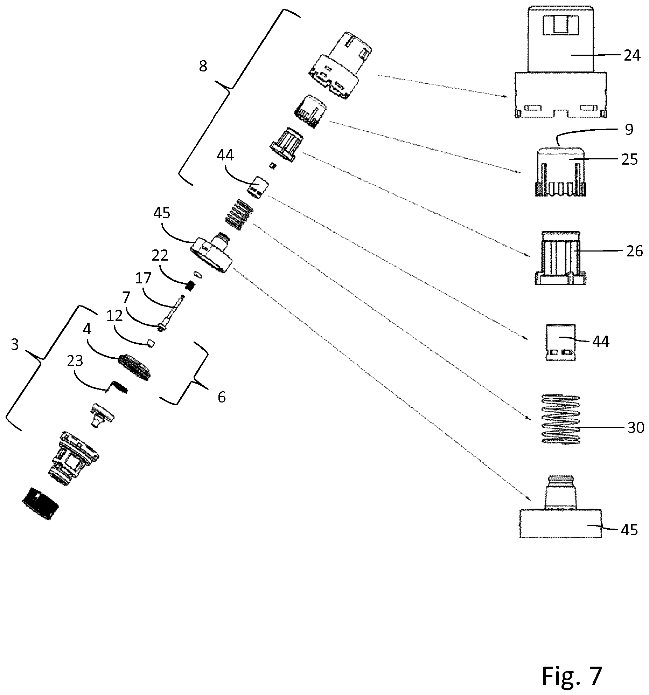

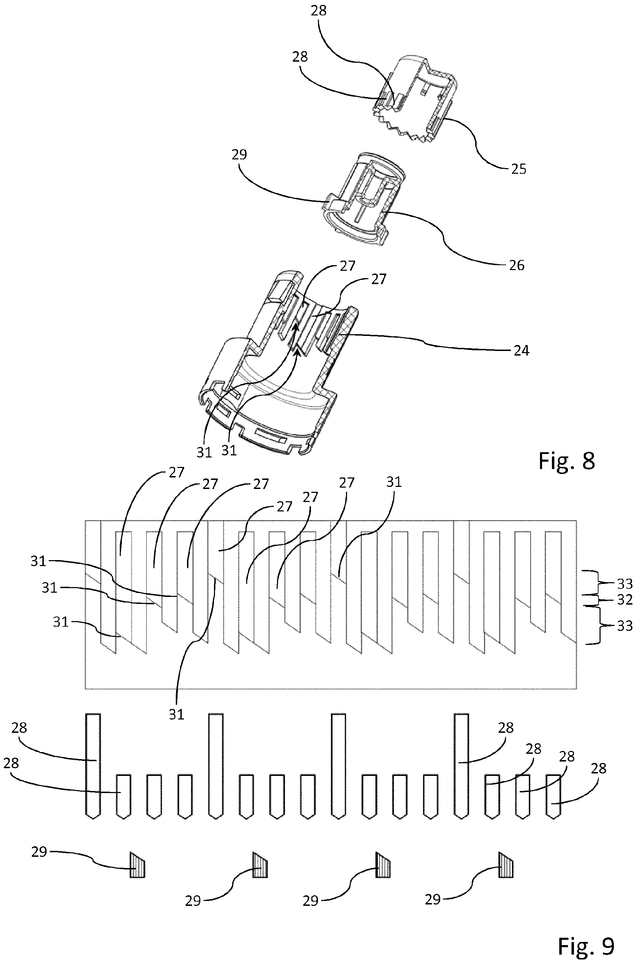

Fig. 7 und 8 zeigen Einzelteile des beschriebenen Sanitärventils 1 zur Erläuterung des Aufbaus des Hauptventils 3, des Pilotventils 6 und der Push-push-Mechanik 8. Die Bezugszeichen sind übereinstimmend mit den Figuren 1 bis 5 gewählt, so dass sich die Erläuterungen zu diesen Figuren auch auf die Figuren 7 und 8 lesen lassen.

Zum Hauptventil 3 ist zusätzlich ein Reinigungselement 23 ersichtlich, welches federnd nachgiebig ausgebildet ist und mit einem stiftförmigen freien Ende die Befüllöffnung 16 durchsetzt und freihält. Mit seinem festen Ende ist das Reinigungselement 22 an dem Gehäuse 2 festgelegt.

Die Push-push-Mechanik 8 hat ein Führungsteil 24, das am Gehäuse 2 oder relativ zu diesem fest angeordnet ist.

In diesem hülsenförmigen Führungsteil 24 laufen das Verdrängerteil 25 und das Schaltteil 26, wobei an dem Verdrängerteil 25 außenseitig das Betätigungselement 9 ausgebildet ist.

An dem Führungsteil 24 sind innenseitig axial verlaufende, hier nutförmige, Führungsbahnen 27 ausgebildet. In diese Führungsbahnen 27 greifen Verdrängerelemente 28 des Verdrängerteils 25 und Führungselemente 29 des Schaltteils 26 ein.

Hierbei sind die als Vorsprünge ausgebildeten Führungselemente 29 unterhalb der ebenfalls als Vorsprünge ausgebildeten Verdrängerelemente 28 angeordnet. Somit führt eine Rückholfeder 30, die eine Rückstellkraft auf das Schaltteil 26 einbringt, auch das Verdrängerteil 25 in seine jeweils oberste Position. Die Rückholfeder 30 wird hierbei auf einer Federführungshülse 44 geführt und stützt sich über ein Federwiderlager 45 an dem Gehäuse 2 ab.

Demnach hat die Push-push-Mechanik 8 ein ortsfestes Führungsteil 24 mit einer Anordnung von mehreren parallel verlaufenden Führungsbahnen27. Jeder Führungsbahn 27 ist eine Schaltposition zugeordnet, die durch einen Anschlag 31 in der jeweiligen Führungsbahn 27 definiert ist.

Die Push-push-Mechanik 8 hat somit weiter ein relativ zum Gehäuse 2 und zum Führungsteil 24 bewegliches Verdrängerteil 25. An diesem sind Verdrängerelemente 28 ausgebildet, die als Vorsprung radial nach außen abstehen und in jeweils eine der radial nach innen geöffneten Führungsbahnen 27 eingreifen. Somit ist in jeder Führungsbahn 27 ein Verdrängerelement 28 angeordnet. Diese Verdrängerelemente 28 verbleiben immer in ihrer jeweiligen Führungsbahn 27.

Die Push-push-Mechanik 8 hat somit schließlich das relativ zum Gehäuse 2 mit dem Führungsteil 24 und zu dem Verdrängerteil 25 beweglich angeordnete Schaltteil 26. Dieses weist vier radial nach außen abstehende Führungselemente 29 auf, die in jeweils eine Führungsbahn 27 eingreifen. Mit dem jeweiligen Verdrängerelement 28 können diese Führungselemente 29 aus der Führungsbahn 27 über deren axial offenes Ende hinausgeschoben werden.

Durch die Rückholfeder 30 und entsprechende Schrägen an dem Verdrängerteil 25 und dem Führungsteil 24 wird dann das Schaltteil 26 in die nächste, benachbarte Führungsbahn 27 überführt.

In den Führungsbahnen 27 ist jeweils der bereits erwähnte Anschlag 31 für das Führungselement 29 ausgebildet, welcher jeweils eine Schaltposition definiert.

Die Figur 9 zeigt in einer abgewickelten Ansicht die relative Lage der Führungsbahnen 27 mit ihren jeweiligen Anschlägen 31, der Verdrängerelemente 28 und der Führungselemente 29 in einer Art auseinander gezogener Darstellung ähnlich einer Explosionsdarstellung.

Es ist erkennbar, dass durch die Anordnung der Anschläge 31 zwei äußere Schaltpositionen und zwei innere Schaltpositionen definiert werden, wie im Folgenden erläutert wird.

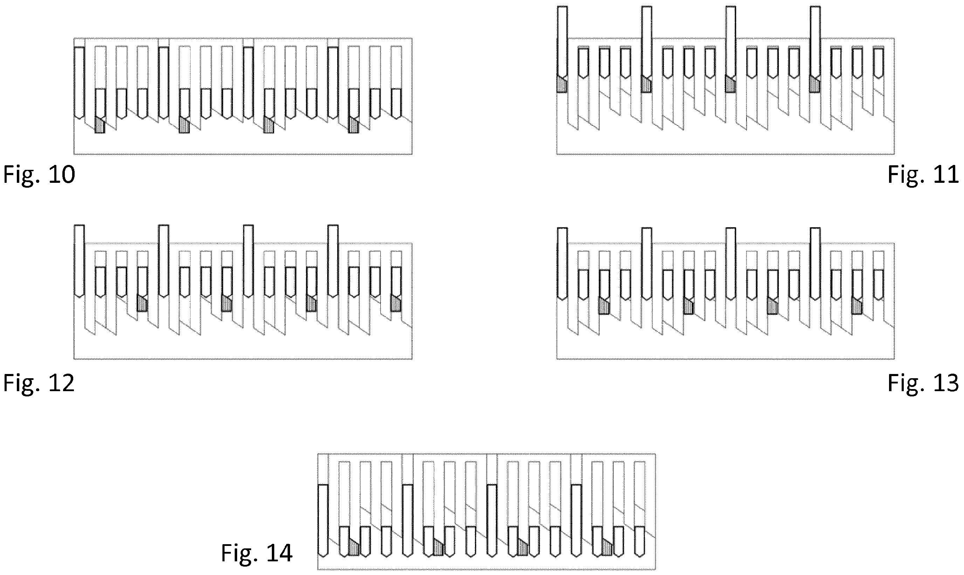

Die Figuren 10 bis 14 zeigen unterschiedliche Eingriffszustände der Teile aus Fig. 8.

Hierbei zeigt Figur 10 die unterste Position der Führungselemente 29, so dass eine Schließstellung wie in Figur 2 definiert ist.

Figur 11 zeigt dagegen eine oberste Position der Führungselemente 29, so dass eine Offenstellung wie in Figur 4 definiert ist.

Die Figuren 12 und 13 zeigen dagegen Zwischenstellungen. Im Unterschied zu den Figuren 2 bis 4 sind jetzt zwei Zwischenstellungen definiert, die zu zwei inneren Schaltpositionen gehören. Jede dieser Schaltpositionen entspricht in etwa der Darstellung nach Figur 3.

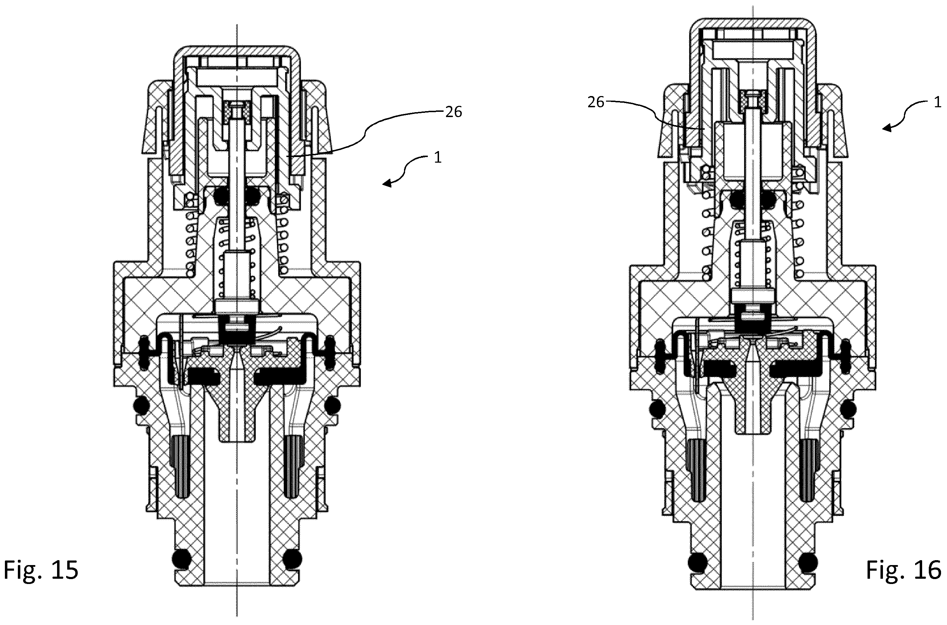

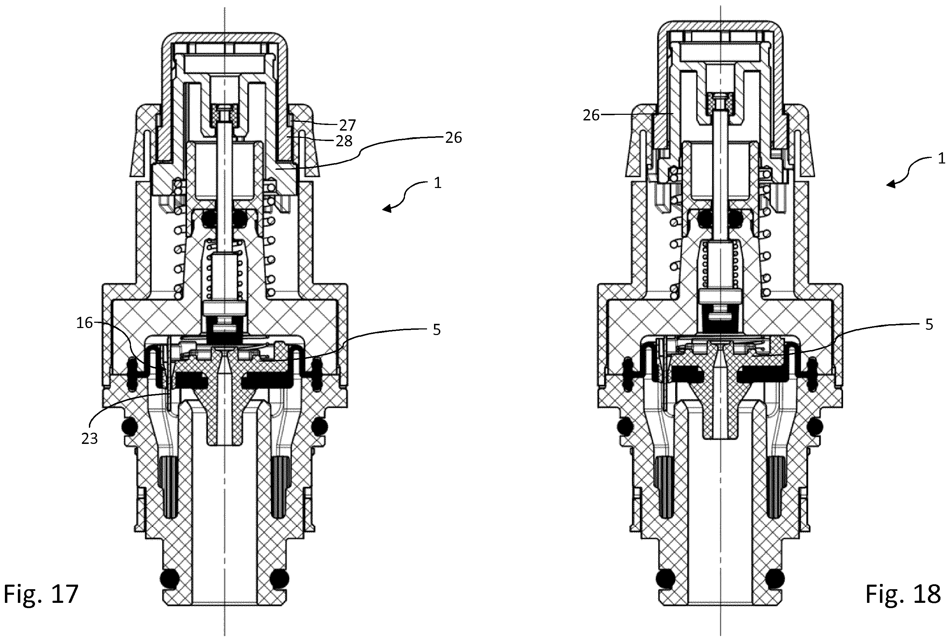

Die Figuren 15 bis 18 zeigen diese vier Schaltpositionen, wobei Fig. 15 die Schaltposition nach Fig. 10, bei Fig. 16 die Schaltposition nach Fig. 12, bei Fig. 17 die Schaltposition nach Fig. 13 und bei Fig. 18 die Schaltposition nach Fig. 11 realisiert ist.

Somit realisiert die Push-push-Mechanik 8 zwei äußere Schaltpositionen nach Fig. 15 und 18 und zwei innere Schaltpositionen nach Fig. 16 und 17. Aus den Figuren 10 bis 13 ist ersichtlich, dass die zwei inneren Schaltpositionen zwischen den zwei äußeren Schaltpositionen liegen, wobei ein Abstand 32 zwischen den zwei inneren Schaltpositionen kleiner ist als ein Abstand 33 jeder der inneren Schaltposition zu einer jeweils benachbarten oder nächstliegenden äußeren Schaltposition.

Fig. 5 zeigt unterschiedliche Durchflusskurven (Durchflussmenge über der Druckdifferenz zwischen dem Ventileingang 13 und dem Ventilausgang 14 des Sanitärventils 1) für die Schaltpositionen gemäß Fig. 15 bis 18.

Es kann gesagt werden, dass die Schaltposition nach Fig. 16 zu der Kurve I, die Schaltposition nach Fig. 17 zu der Kurve II und die Schaltposition nach Fig. 18 zu der Kurve III aus Fig. 5 gehört. Die Schaltposition gemäß Fig. 15 hat den Durchfluss Null. Die größeren Abstände 33 sind erforderlich, um Totwege in der Push-push-Mechanik 8 und im Pilotventil 6 zu berücksichtigen, so dass sich die näherungsweise gleichförmige Verteilung der Kurven I - III in Fig. 5 ergibt.

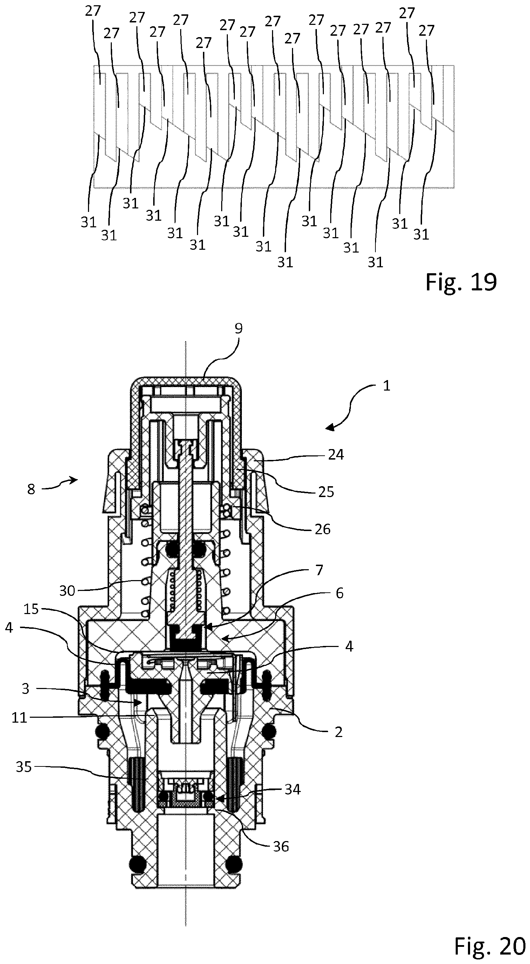

Figur 19 zeigt eine mögliche Anordnung der Anschläge 31 in den Führungsbahnen 27, mit der sich nur drei Schaltpositionen, beispielsweise gemäß Fig. 2 bis 4, ergeben.

Das Führungsteil 24 ist im Übrigen gegenüber den vorangehenden Zeichnungen unverändert, so dass durch den bloßen Austausch des Führungsteils 24 eine Baureihe von Sanitärventilen 1 mit unterschiedlichem Schalt- und/oder Durchflussverhalten gebildet werden kann.

Figur 20 zeigt ein weiteres erfindungsgemäßes Sanitärventil 1. Zur Bezeichnung sind dieselben Bezugszeichen wie bei den vorangehenden Figuren 1 bis 19 gewählt, so dass die Erläuterungen zu den Figuren 1 bis 19 auch zu Figur 20 gelten.

Dem Hauptventil 3 abströmseitig nachgelagert ist zusätzlich ein Durchflussmengenregler 34 angeordnet.

Der Durchflussmengenregler 34 ist hierbei in einem rohrförmigen Abschnitt 35 des Ventilausgangs 14 des Hauptventils 3 angeordnet. Aus der Figur 20 ist ersichtlich, dass der Durchflussmengenregler 34 durch den Ventilsitz 11 des Hauptventils 3 in den rohrförmigen Abschnitt 35 bis zu einem Anschlag 36 eingesetzt ist.

Der Durchflussmengenregler 34 stellt in einem Arbeitsbereich eine vorgegebene Soll-Durchflussmenge druckunabhängig ein.

Ein Durchflussmengenregler 34 kann für die Zwecke der Erfindung allgemein beispielsweise dadurch charakterisiert werden, dass ein unter Wasserdruck deformierbares Regelelement 37 mit einem an einem Reglerkern 38 einen Regelspalt 39 definiert, dessen Öffnungsquerschnitt aufgrund der Deformierbarkeit des Regelelements - häufig ein O-Ring oder eine Scheibe aus einem elastischen Material - druckabhängig ist. Bei hohen Drücken oder Druckdifferenzen am Ventilsitz 11 ergibt sich ein kleiner Öffnungsquerschnitt und bei kleinen Drücken oder Druckdifferenzen ein großer Querschnitt, so dass ein im Arbeitsbereich konstanter Durchfluss mit einer Soll-Durchflussmenge erreicht ist.

Der Regelspalt 39 ist hier beispielhaft radial innerhalb des Regelelements 37 ausgebildet. Es ist jedoch auch oder zusätzlich ein Regelspalt 39 radial außerhalb des Regelelements 37 ausbildbar. Die verjüngende Grundform des Reglerkerns 38 kann somit - wie gezeigt - als positive Außenkontur und/oder - nicht weiter dargestellt - als negative Innenkontur ausgebildet sein.

Im Ausführungsbeispiel ist der Reglerkern 38 entlang einer Stellrichtung der Membran 4 mit einer verjüngenden Grundform ausgebildet.

An dem Reglerkern 38 ist ein Regelprofil 40 ausgebildet, welches mit dem elastisch verformbaren Regelelement 37 den Regelspalt 39 mit einem druckabhängigen Öffnungsquerschnitt bildet.

Der Reglerkern 38 durchgreift hierbei das ringförmige Regelelement 37.

Die Soll-Durchflussmenge des Durchflussmengenreglers 34 ist mit der Push-push-Mechanik 8 veränderbar, wie im Folgenden näher beschrieben wird.

Hierzu ist der Reglerkern 38 des Durchflussmengenreglers 34 relativ zu dem Regelelement 37 verschiebbar angeordnet. Da der Reglerkern 38 eine verjüngende Grundform aufweist, ergibt sich somit im druckfreien Zustand ein veränderlicher Öffnungsquerschnitt des Regelspaltes 29.

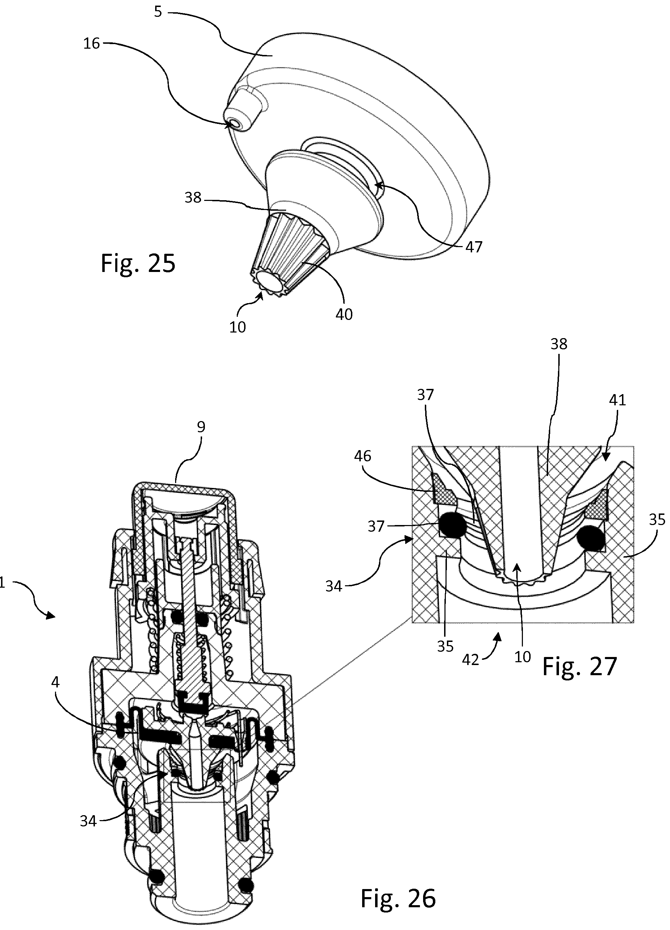

Der Reglerkern 38 ist hierbei - wie in Fig. 25 bis 27 gezeigt - an dem Ventilkörper 5 ausgebildet und somit mit der Membrane 4 verbunden.

Der Reglerkern 38 ist somit mit der Push-push-Mechanik 8 gekoppelt. Zu jeder Schaltposition gehört somit eine Eintauchtiefe des Reglerkerns 38 in den Durchflussmengenregler 34.

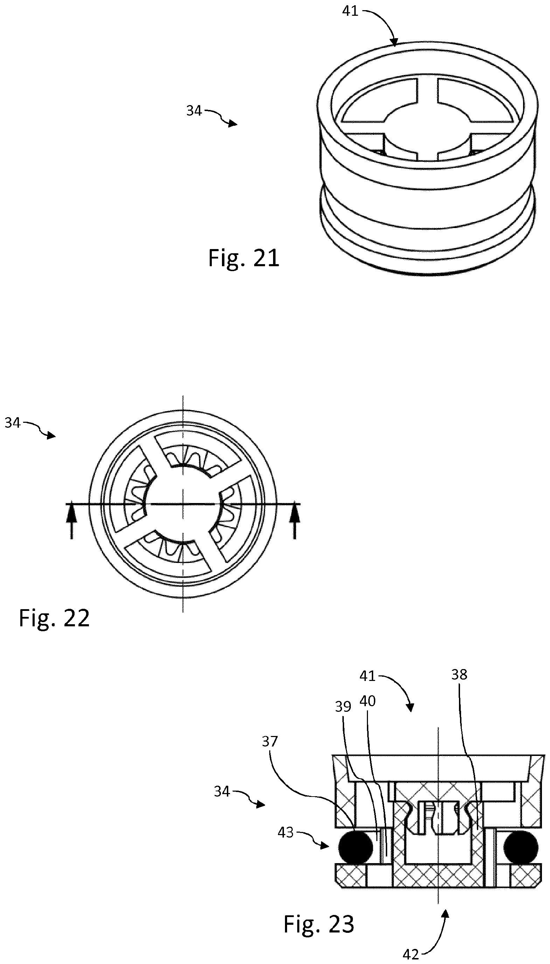

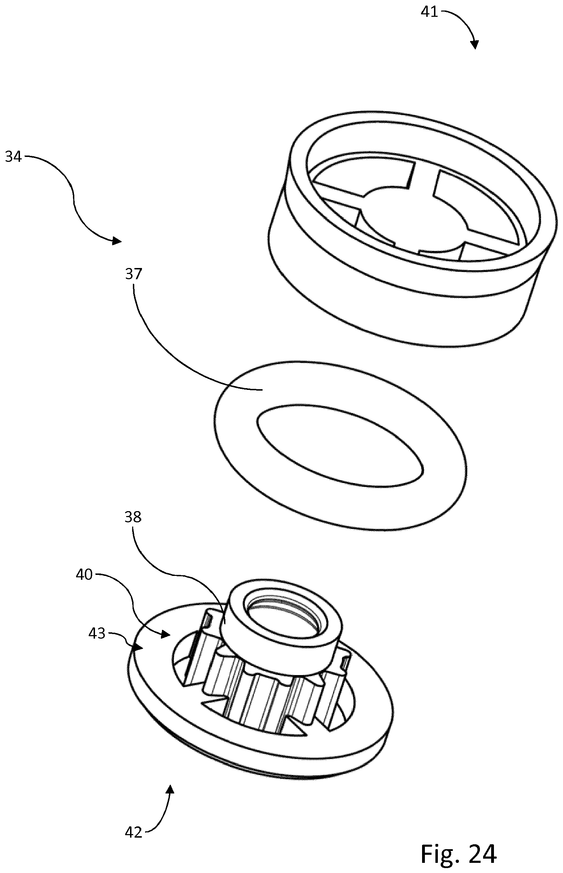

In den Figuren 21 bis 24 ist der Durchflussmengenregler 34 in Einzeldarstellung gezeigt.

Es ist ersichtlich, dass das Regelelement 37 zwischen einer Zuströmseite 41 und einer Abströmseite 42 in einer Aufnahme 43 angeordnet ist. Diese Aufnahme 43 ist radial offen ausgebildet, so dass das Regelelement 37 in einer Aufnahme 43 angeordnet ist, deren radialer Abschluss durch den rohrförmigen Abschnitt 35 des Ventilausgangs 14 gebildet wird.

In den Figuren 25 bis 27 sind weitere Einzeldarstellungen zu dem Sanitärventil nach Fig. 1 bis 6 gezeigt.

Demnach weist auch dieses Sanitärventil 1 einen Durchflussmengenregler 34 auf. Dieser ist jedoch nicht wie in den Fig. 21 bis 24 als einsetzbare Einheit ausgestaltet, sondern in dem rohrförmigen Abschnitt 35 angeformt, wobei das Regelelement 37 durch einen zuströmseitigen Haltering 46 axial gesichert ist. Es ist in Fig. 25 ersichtlich, dass der Reglerkern 38 an dem Ventilkörper 5 abströmseitig angeformt ist.

Hierbei ist die Membran 4 zwischen dem Reglerkern 38 und dem Ventilkörper 5 angeordnet, wobei in der Membran 4 ein Loch ausgebildet ist, durch welche ein Verbindungsstück 47, das den Reglerkern 38 mit dem Ventilkörper 5 einstückig verbindet, greift.

Der Reglerkern 38 ist somit gemeinsam mit dem Ventilkörper 5 verstellbar.

Hierdurch wird eine Kopplung erreicht, die bewirkt, dass die Soll-Durchflussmenge, die durch den Durchflussmengenregler 34 eingestellt ist, mit der Push-push-Mechanik 8 in diskreten Stufen verstellbar ist.

Bei dem Sanitärventil 1 wird somit vorgeschlagen, eine bewegliche Membran 4 eines Hauptventils 3 mit einer Push-push-Mechanik 8 anzusteuern, die wenigstens drei diskrete Schaltpositionen des über ein Pilotventil 6 gesteuerten Hauptventils 3 definiert und/oder dem Hauptventil 3 einen vorzugsweise mit der Push-push-Mechanik 8 verstellbaren Durchflussmengenregler 34 unverlierbar nachzuschalten.

### Bezugszeichenliste

- 1: Sanitärventil
- 2: Gehäuse
- 3: Hauptventil
- 4: Membran
- 5: Ventilkörper
- 6: Pilotventil
- 7: Ventilstößel
- 8: Push-push-Mechanik
- 9: Betätigungselement
- 10: Entlastungsöffnung
- 11: Ventilsitz
- 12: Anschlag
- 13: Ventileingang
- 14: Ventilausgang
- 15: Druckkammer
- 16: Befüllöffnung
- 17: Steuerelement
- 18: Ausgleichvorrichtung
- 19: Ausgleichstößel
- 20: Stößelaufnahme
- 21: Stößelanschlag
- 22: Rückstellelement
- 23: Reinigungselement
- 24: Führungsteil
- 25: Verdrängerteil
- 26: Schaltteil
- 27: Führungsbahn
- 28: Verdrängerelement
- 29: Führungselement
- 30: Rückholfeder
- 31: Anschlag

- 32: Abstand
- 33: Abstand
- 34: Durchflussmengenregler
- 35: rohrförmiger Abschnitt
- 36: Anschlag
- 37: Regelelement
- 38: Reglerkern
- 39: Regelspalt
- 40: Regelprofil
- 41: Zuströmseite
- 42: Abströmseite
- 43: Aufnahme
- 44: Federführungshülse
- 45: Federwiderlager
- 46: Haltering
- 47: Verbindungsstück

## Patentansprüche

1. Sanitärventil, mit einem Hauptventil (3), das eine bewegliche Membran (4) aufweist, und einen Pilotventil (6), mit welchen das Hauptventil (3) ansteuerbar ist, wobei eine Position der Membran (4) durch eine Stellung eines Ventilstößels (7) des Pilotventils (6) vorgebbar ist, wobei der Ventilstößel (7) mit einer Push-push-Mechanik (8) verbunden ist, wobei der Ventilstößel (7) mit der Push-push-Mechanik (8) zwischen Schaltpositionen umschaltbar ist, wobei die Push-push-Mechanik (8) durch eine mechanische Führung einen Wechsel zwischen den erreichbaren Schaltpositionen durch wiederholtes, gleichartiges Drücken eines Betätigungselements (9) erzwingt, wobei die Push-push-Mechanik (8) ein bewegliches Verdrängerteil (25) mit mehreren jeweils in einer von mehreren Führungsbahnen (27) laufenden Verdrängerelementen (28) aufweist, und dass die Push-push-Mechanik (8) ein gegen eine Rückstellkraft beweglich angeordnetes Schaltteil (26) mit wenigstens einem in wenigstens einer Führungsbahn (27) laufenden und mit den mehreren beweglichen Verdrängerelementen (28) aus einer Führungsbahn (27) in eine benachbarte Führungsbahn (27) überführbares Führungselement (29) aufweist, wobei der Ventilstößel (7) in einer inneren Schaltposition der Schaltpositionen einen Anschlag für die bewegliche Membran (4) bildet, **dadurch gekennzeichnet, dass** der Ventilstößel (7) mit der Push-push-Mechanik (8) zwischen wenigstens drei Schaltpositionen umschaltbar ist.

2. Sanitärventil nach Anspruch 1, **dadurch gekennzeichnet, dass** die Push-push-Mechanik (8) zwei äußere Schaltpositionen und wenigstens zwei innere Schaltpositionen definiert, wobei die wenigstens zwei inneren Schaltpositionen zwischen den zwei äußeren Schaltpositionen liegen, insbesondere wobei ein Abstand zwischen den zwei inneren Schaltpositionen kleiner ist als ein Abstand einer, insbesondere jeder der inneren Schaltposition zu einer jeweils benachbarten oder nächstliegenden äußeren Schaltposition.

3. Sanitärventil nach einem der vorangehenden Ansprüche, **dadurch gekennzeichnet, dass** eine Schaltposition der wenigstens drei Schaltpositionen, insbesondere eine äußere Schaltposition, eine Offenstellung des Pilotventils (6) definiert und/oder dass eine Schaltposition der wenigstens drei Schaltpositionen eine Schließstellung des Pilotventils (6) definiert.

4. Sanitärventil nach einem der vorangehenden Ansprüche, **dadurch gekennzeichnet, dass** die Push-push-Mechanik (8) ein vorzugsweise ortsfestes Führungsteil (24) mit einer Anordnung von mehreren vorzugsweise parallel verlaufenden Führungsbahnen(27), insbesondere wobei jeder Führungsbahn (27) eine Schaltposition zugeordnet, insbesondere durch einen Anschlag (31) in der jeweiligen Führungsbahn (27) definiert, ist.

5. Sanitärventil nach einem der vorangehenden Ansprüche, **dadurch gekennzeichnet, dass** in den Führungsbahnen (27) jeweils der oder ein Anschlag (31) für das Führungselement (29) ausgebildet ist, welcher jeweils eine Schaltposition definiert.

6. Sanitärventil nach einem der vorangehenden Ansprüche, **dadurch gekennzeichnet, dass** zwischen wenigstens einem Ventileingang (13) und wenigstens einem Ventilausgang (14) ein Ventilsitz (11) angeordnet ist, der mit der Membran (4) verschließbar ist, wobei die Membran (4) eine Druckkammer (15) abschließt, die aus dem wenigstens einen Ventileingang (13) befüllbar ist, sodass die Membran (4) bei befüllter Druckkammer (15) in einer Schließstellung den Ventilsitz (11) verschließt und bei entlasteter Druckkammer (15) in einer Offenstellung den Ventilsitz (11) freigibt.

7. Sanitärventil nach einem der vorangehenden Ansprüche, **dadurch gekennzeichnet, dass** mit dem Ventilstößel (7) eine in den wenigstens einen Ventilausgang (14) mündende Entlastungsöffnung (10) an der Membran (4) verschließbar ist.

8. Sanitärventil nach einem der vorangehenden Ansprüche, **dadurch gekennzeichnet, dass** der Ventilstößel (7) an einem in die oder eine Druckkammer (15) von außen abgedichtet eingeführten Steuerelement (17) ausgebildet ist.

9. Sanitärventil nach einem der vorangehenden Ansprüche, **dadurch gekennzeichnet, dass** in einer Wirkverbindung zwischen dem Pilotventil (6) und der Push-push-Mechanik (8) eine Ausgleichvorrichtung (18) ausgebildet ist, die eine Betätigung der Push-push-Mechanik (8) erlaubt, wenn das Pilotventil (6) geschlossen ist, insbesondere wobei eine Kopplung zwischen dem Pilotventil (6) und der Push-push-Mechanik (8) über ein vorzugsweise an dem Ventilstößel (7) angreifendes Rückstellelement (22) hergestellt ist.

10. Sanitärventil, nach einem der vorangehenden Ansprüche, , **dadurch gekennzeichnet, dass** dem Hauptventil (3) nachgelagert ein Durchflussmengenregler (34) angeordnet ist.

11. Sanitärventil nach einem der vorangehenden Ansprüche, **dadurch gekennzeichnet, dass** der Durchflussmengenregler (34) in einem rohrförmigen Abschnitt (35) des oder eines Ventilausgangs (14) des Hauptventils (3) angeordnet, insbesondere durch einen Ventilsitz (11) des Hauptventils (3) bis zu einem Anschlag in den rohrförmigen Abschnitt (35) eingesetzt, ist.

12. Sanitärventil nach einem der vorangehenden Ansprüche, **dadurch gekennzeichnet, dass** der oder ein einen Regelspalt (39) bildender Reglerkern (38) eine in einer Richtung, insbesondere längs einer Stellrichtung der Membran (4), verjüngende Grundform aufweist.

13. Sanitärventil nach einem der vorangehenden Ansprüche, **dadurch gekennzeichnet, dass** an einem oder dem Reglerkern (38) ein Regelprofil (40) ausgebildet ist, welches mit einem elastisch verformbaren Regelelement (37) einen Regelspalt (39) mit einem druckabhängigen Öffnungsquerschnitt definiert.

14. Sanitärventil nach einem der vorangehenden Ansprüche, **dadurch gekennzeichnet, dass** ein Regelelement (37) als O-Ring ausgebildet ist, insbesondere wobei der oder ein Reglerkern (38) das Regelelement (37) durchgreift.

15. Sanitärventil nach einem der vorangehenden Ansprüche, **dadurch gekennzeichnet, dass** eine Soll-Durchflussmenge des Durchflussmengenreglers (34) mit einer oder der Push-push-Mechanik (8) veränderbar ist.

16. Sanitärventil nach einem der vorangehenden Ansprüche, **dadurch gekennzeichnet, dass** ein Reglerkern (38) des Durchflussmengenreglers (34) verstellbar, insbesondere verschiebbar, angeordnet und mit der oder einer Push-push-Mechanik (8) gekoppelt ist.

17. Sanitärventil nach einem der vorangehenden Ansprüche, **dadurch gekennzeichnet, dass** ein oder der Reglerkern (38) mit der beweglichen Membran (4) verbunden ist.

18. Sanitärventil nach einem der vorangehenden Ansprüche, **dadurch gekennzeichnet, dass** ein oder das Regelelement (37) in einer Aufnahme angeordnet ist, deren radialer Abschluss durch den oder einen rohrförmigen Abschnitt des oder eines Ventilausgang (14) gebildet ist.

19. Baureihe von Sanitärventilen, **dadurch gekennzeichnet, dass** die Varianten jeweils ein Sanitärventil (1) nach einem der vorangehenden Ansprüche bilden, dass die Sanitärventile (1) einen übereinstimmenden Grundaufbau, insbesondere mit Hauptventil (3), Pilotventil (6), Verdrängerteil (25) und Schaltteil (26), aufweisen und sich durch unterschiedliche Führungsteile (24), insbesondere unterschiedliche Positionierung von Anschlägen an den Führungsbahnen (27), unterscheiden.

## Claims

1. Sanitary valve, having a main valve (3) which has a movable diaphragm (4), and a pilot valve (6) by which the main valve (3) is actuatable, wherein a position of the diaphragm (4) is predefinable by a setting of a valve tappet (7) of the pilot valve (6), wherein the valve tappet (7) is connected to a push-push mechanism (8), wherein the valve tappet (7) is switchable between switching positions with the push-push mechanism (8), wherein the push-push mechanism (8), by a mechanical guide, enforces an alternation between the achievable switching positions by repeated, uniform pressing of an actuation element (9), wherein the push-push mechanism (8) has a movable displacement part (25) with in each case several displacement elements (28) that run in one of several guide tracks (27), and the push-push mechanism (8) has a switching part (26) which is arranged movably counter to a restoring force and which has at least one guide element (29) which runs in at least one guide track (27) and which, by way of the several movable displacement elements (28), is able to be transferred from one guide track (27) to a neighbouring guide track (27), wherein the valve tappet (7), in an inner switching position of the switching positions, defines a stop for the movable diaphragm (4), **characterized in that** the valve tappet (7) is switchable with the push-push mechanism (8) between at least three switching positions.

2. Sanitary valve according to Claim 1, **characterized in that** the push-push mechanism (8) defines two outer switching positions and at least two inner switching positions, wherein the at least two inner switching positions lie between the two outer switching positions, in particular wherein a spacing between the two inner switching positions is smaller than a spacing of one, in particular each, of the inner switching positions from a respectively neighbouring or closest outer switching position.

3. Sanitary valve according to one of the preceding claims, **characterized in that** one switching position of the at least three switching positions, in particular one outer switching position, defines an open position of the pilot valve (6), and/or **in that** one switching position of the at least three switching positions defines a closure position of the pilot valve (6).

4. Sanitary valve according to one of the preceding claims, **characterized in that** the push-push mechanism (8) has a preferably positionally fixed guide part (24) with an arrangement of several preferably parallel guide tracks (27), in particular wherein each guide track (27) is assigned a switching position, in particular defined by a stop (31) in the respective guide track (27).

5. Sanitary valve according to one of the preceding claims, **characterized in that** the or a stop (31) for the guide element (29), which in each case defines a switching position, is configured in each case in the guide tracks (27).

6. Sanitary valve according to one of the preceding claims, **characterized in that** a valve seat (11) which is closable by the diaphragm (4) is arranged between at least one valve inlet (13) and at least one valve outlet (14), wherein the diaphragm (4) closes off a pressure chamber (15) which is fillable from the at least one valve inlet (13), such that the diaphragm (4), with the pressure chamber (15) filled, closes the valve seat (11) in a closure position and, with the pressure chamber (15) relaxed, releases the valve seat (11) in an open position.

7. Sanitary valve according to one of the preceding claims, **characterized in that** a relief opening (10) on the diaphragm (4) that opens into the at least one valve outlet (14) is closable by the valve tappet (7).

8. Sanitary valve according to one of the preceding claims, **characterized in that** the valve tappet (7) is formed on a control element (17) that is inserted from the outside in a sealed manner into the or a pressure chamber (15).

9. Sanitary valve according to one of the preceding claims, **characterized in that** an equalizing device (18) is formed in an operative connection between the pilot valve (6) and the push-push mechanism (8), said equalizing device (18) permitting actuation of the push-push mechanism (8) when the pilot valve (6) is closed, in particular wherein a coupling between the pilot valve (6) and the push-push mechanism (8) is produced via a restoring element (22) that preferably engages on the valve tappet (7).

10. Sanitary valve according to one of the preceding claims, **characterized in that** a flowrate regulator (34) is arranged downstream from the main valve (3).

11. Sanitary valve according to one of the preceding claims, **characterized in that** the flowrate regulator (34) is arranged in a tubular portion (35) of the or a valve outlet (14) of the main valve (3), in particular being inserted through a valve seat (11) of the main valve (3) as far as a stop in the tubular portion (35).

12. Sanitary valve according to one of the preceding claims, **characterized in that** the or a regulator core (38), which forms a regulating gap (39), has a basic shape that tapers in one direction, in particular along an adjustment direction of the diaphragm (4).

13. Sanitary valve according to one of the preceding claims, **characterized in that** a regulating profile (40) is formed on the regulator core (38) and, with an elastically deformable regulating element (37), defines a regulating gap (39) having a pressuredependent opening cross section.

14. Sanitary valve according to one of the preceding claims, **characterized in that** a regulating element (37) is formed as an O-ring, in particular wherein the or a regulator core (38) engages through the regulating element (37).

15. Sanitary valve according to one of the preceding claims, **characterized in that** a nominal flowrate of the flowrate regulator (34) is modifiable by a or the push-push mechanism (8).

16. Sanitary valve according to one of the preceding claims, **characterized in that** a regulator core (38) of the flowrate regulator (34) is arranged to be adjustable, in particular displaceable, and is coupled to the or a push-push mechanism (8).

17. Sanitary valve according to one of the preceding claims, **characterized in that** a or the regulator core (38) is connected to the movable diaphragm (4).

18. Sanitary valve according to one of the preceding claims, **characterized in that** a or the regulating element (37) is arranged in a seat, of which the radial closure is formed by the or a tubular portion of the or a valve outlet (14).

19. Series of sanitary valves, **characterized in that** the variants in each case form a sanitary valve (1) according to one of the preceding claims, **in that** the sanitary valves (1) have a uniform basic structure, in particular with main valve (3), pilot valve (6), displacement part (25) and switching part (26), and differ in terms of different guide parts (24), in particular different positioning of stops on the guide tracks (27).

## Revendications

1. Vanne sanitaire avec une vanne principale (3) qui possède une membrane mobile (4) et une vanne pilote (6) avec laquelle la vanne principale (3) peut être commandée, dans laquelle une position de la membrane (4) peut être prédéfinie par une position d'un poussoir de vanne (7) de la vanne pilote (6), dans laquelle le poussoir de vanne (7) est relié avec un mécanisme à double poussée (8), dans laquelle le poussoir de vanne (7) peut être commuté entre plusieurs positions de commutation avec le mécanisme à double poussée (8), dans laquelle le mécanisme à double poussée (8) impose par le biais d'un guidage mécanique une alternance entre les positions de commutation atteignables en enfonçant de façon similaire à plusieurs reprises un élément d'actionnement (9), dans laquelle le mécanisme à double poussée (8) possède un organe de refoulement mobile (25) avec plusieurs éléments de refoulement (28) courant chacun dans une parmi plusieurs voies de guidage (27), et le mécanisme à double poussée (8) possède un organe de commutation (26) mobile contre une force de rappel avec au moins un élément de guidage (29) courant dans au moins une voie de guidage (27) et pouvant être transféré avec les multiples éléments de refoulement mobiles (28) d'une voie de guidage (27) dans une voie de guidage (27) voisine, et dans laquelle le poussoir de vanne (7) forme dans une position de commutation intérieure parmi les positions de commutation une butée pour la membrane mobile (4), **caractérisée en ce que** le poussoir de vanne (7) peut être commuté avec le mécanisme à double poussée (8) entre au moins trois positions de commutation.

2. Vanne sanitaire selon la revendication 1, **caractérisée en ce que** le mécanisme à double poussée (8) définit deux positions de commutation extérieures et au moins deux positions de commutation intérieures, dans laquelle les au moins deux positions de commutation intérieures se trouvent entre les deux positions de commutation extérieures, en particulier dans laquelle une distance entre les deux positions de commutation intérieures est inférieure à une distance d'une, en particulier de chacune des positions de commutation intérieures à une position de commutation extérieure voisine ou la plus proche.

3. Vanne sanitaire selon une des revendications précédentes, **caractérisée en ce qu'**une position de commutation parmi les au moins trois positions de commutation, en particulier une position de commutation extérieure définit une position ouverte de la vanne pilote (6) et/ou qu'une position de commutation parmi les au moins trois positions de commutation définit une position fermée de la vanne pilote (6).

4. Vanne sanitaire selon une des revendications précédentes, **caractérisée en ce que** le mécanisme à double poussée (8) est un organe de guidage (24) de préférence fixe avec un dispositif constitué de plusieurs voies de guidage (27) courant de préférence parallèlement, en particulier dans lequel à chaque voie de guidage (27) est associée une position de commutation définie en particulier par une butée (31) dans la voie de guidage (27) correspondante.

5. Vanne sanitaire selon une des revendications précédentes, **caractérisée en ce que** dans les voies de guidage (27) est formée la ou une butée (31) pour l'élément de guidage (29) qui définit une position de commutation.

6. Vanne sanitaire selon une des revendications précédentes, **caractérisée en ce qu'**entre au moins une entrée de vanne (13) et au moins une sortie de vanne (14) est disposé un siège de vanne (11) qui peut être verrouillé avec la membrane (4), dans laquelle la membrane (4) obture une chambre de compression (15) qui peut être remplie à partir de l'au moins une ventrée de vanne (13), de sorte que, lorsque la chambre de compression (15) est remplie, la membrane (4) verrouille le siège de vanne (11) dans une position fermée et, lorsque la chambre de compression (15) est déchargée, libère le siège de vanne (11) dans une position ouverte.

7. Vanne sanitaire selon une des revendications précédentes, **caractérisée en ce qu'**avec le poussoir de vanne (7), une ouverture de déchargement (10) débouchant dans l'au moins une sortie de vanne (14) peut être verrouillée au niveau de la membrane (4).

8. Vanne sanitaire selon une des revendications précédentes, **caractérisée en ce que** le poussoir de vanne (7) est formé au niveau d'un élément de commande (17) introduit dans la ou une chambre de compression (15) de façon étanche par rapport à l'extérieur.

9. Vanne sanitaire selon une des revendications précédentes, **caractérisée en ce que** dans une liaison active entre la vanne pilote (6) et le mécanisme à double poussée (8) est formé un dispositif d'équilibrage (18) qui permet un actionnement du mécanisme à double poussée (8) quand la vanne pilote (6) est fermée, dans laquelle en particulier un couplage est établi entre la vanne pilote (6) et le mécanisme à double poussée (8) par un élément de rappel (22) entrant en prise de préférence au niveau du poussoir de vanne (7).

10. Vanne sanitaire selon une des revendications précédentes, **caractérisée en ce qu'**un régulateur de débit (34) est disposé en aval de la vanne principale (3).

11. Vanne sanitaire selon une des revendications précédentes, **caractérisée en ce que** le régulateur de débit (34) est disposé dans une section tubulaire (35) de la ou d'une sortie de vanne (14) de la vanne principale (3), étant préférence inséré dans la section tubulaire (35) à travers un siège de vanne (11) de la vanne principale (3) jusqu'à une butée.

12. Vanne sanitaire selon une des revendications précédentes, **caractérisée en ce que** le ou un noyau de régulateur (38) formant une fente de réglage (39) présente une forme de base diminuant dans une direction, en particulier le long d'une direction de réglage de la membrane (4).

13. Vanne sanitaire selon une des revendications précédentes, **caractérisée en ce que** sur un ou le noyau de régulateur (38) est formé un profil de réglage (40) qui définit avec un élément de réglage (37) déformable de façon élastique une fente de réglage (39) dotée d'une section d'ouverture dépendante de la pression.

14. Vanne sanitaire selon une des revendications précédentes, **caractérisée en ce qu'**un élément de réglage (37) est constitué par une bague torique, dans laquelle en particulier le ou un noyau de régulateur (38) traverse l'élément de réglage (37).

15. Vanne sanitaire selon une des revendications précédentes, **caractérisée en ce qu'**un débit de consigne du régulateur de débit (34) peut être modifié avec un ou le mécanisme à double poussée (8).

16. Vanne sanitaire selon une des revendications précédentes, **caractérisée en ce qu'**un noyau de régulateur (38) du régulateur de débit (34) est disposé de façon réglable, en particulier verrouillable, et couplé avec le ou un mécanisme à double poussée (8).

17. Vanne sanitaire selon une des revendications précédentes, **caractérisée en ce qu'**un ou le noyau de régulateur (38) est relié avec une membrane (4) mobile.

18. Vanne sanitaire selon une des revendications précédentes, **caractérisée en ce qu'**un ou l'élément de réglage (37) est disposé dans un logement dont l'extrémité radiale est formée par la ou une section tubulaire de la ou d'une sortie de vanne (14).

19. Série de vannes sanitaires, **caractérisée en ce que** les variantes forment chacune une vanne sanitaire (1) selon une des revendications précédentes, et que les vannes sanitaires (1) possèdent une structure de base similaire, en particulier avec une vanne principale (3), une vanne pilote (6), un organe de refoulement (25) et un organe de commutation (26), et se différencient par des organes de guidage (24) différents, en particulier un positionnement différent des butées sur les voies de guidage (27).
